# EUROPEAN PATENT SPECIFICATION

(11) **EP 4 184 458 B1**
(45) Date of publication and mention of the grant of the patent: **23.10.2024**
(21) Application number: 21209364.5
(22) Date of filing: 19.11.2021
(51) Int. Cl.: G07C 5/00, B60L 3/00, B60L 3/04, B60L 8/00, B60L 50/61

(54) **A TRUCK COMPLYING WITH THE AGREEMENT CONCERNING THE INTERNATIONAL CARRIAGE OF DANGEROUS GOODS BY ROAD (ADR)**
LASTKRAFTWAGEN, DER DAS ÜBEREINKOMMEN ÜBER DIE INTERNATIONALE BEFÖRDERUNG GEFÄHRLICHER GÜTER AUF DER STRASSE (ADR) ERFÜLLT
CAMION CONFORME À L'ACCORD RELATIF AU TRANSPORT INTERNATIONAL DE MARCHANDISES DANGEREUSES

(43) Date of publication of application: 24.05.2023
(73) Proprietor: VOLVO TRUCK CORPORATION, 405 08 Göteborg (SE)
(72) Inventor: BERNY, François, 01380 Saint cyr sur menthon (FR); MAZAUFROY, Cédric, 01360 Béligneux (FR); LAPERRIERE, Renaud, 69006 Lyon (FR)
(74) Representative: Germain Maureau

(56) References cited:
- US-A1- 2008 143 292
- US-A1- 2010 263 947
- US-A1- 2018 056 769

## Description

### TECHNICAL FIELD

The invention relates to a truck complying with the Agreement concerning the international carriage of Dangerous goods by Road (ADR) and a method for the management of the trucks which are ADR compliant.

The invention can be applied to low-duty, medium-duty and heavy-duty trucks. In particular, the invention is intended for trucks which are ADR compliant.

### BACKGROUND

Document US 2010/263947 A1 relates to a truck adapted to transport Dangerous Goods.

Today, diesel trucks, and in particular long-haul trucks are equipped with many electrical devices designed for driver comfort. For instance, such electrical devices include HVAC (heating/cooling), fridge, phone/tablet charger, TV, water heater, etc. These electrical devices are often greedy in terms of energy consumption and draw a lot of energy from the battery when the engine is switched off, typically in parked configuration. If there are used simultaneously or for a prolonged period of time, all these devices/loads can severely decrease the battery charging rate, and in the worst case, the driver may not be able to restart the engine.

It is therefore known to integrate solar panels for example on a vehicle roof to increase battery charging level, even when the vehicle engine is switched off (alternator nut running).

Some trucks which transport hazardous material need to fulfil so called ADR regulations for road transport with regard to packaging, load securing, classification and labelling of dangerous goods.

As part of the ADR regulations, the battery has to be isolated in case of emergency such as an accident, a fire, gas leak, bad weather conditions. This is usually achieved by a master switch that opens the electrical circuits located close to the battery.

There is thus a need to increase vehicle safety in case of emergency.

### SUMMARY

It is to these disadvantages that the invention aims more particularly to remedy, by proposing a safer truck complying with the ADR regulation wherein the solar panel and the battery may be isolated in case of an emergency situation. Additionally, the invention aims to provide an easy and robust method for the management of this truck in case of an emergency situation.

The object is achieved by a truck adapted to transport Dangerous Goods, the truck being characterized in that it comprises:
- a chassis on which is arranged a battery;
- a cab mounted on the chassis,
- a solar panel for charging the battery, said solar panel being arranged on cab roof ;
- a first relay configured to disconnect the battery and a second relay, distinctive from the first relay, configured to disconnect the solar panel;
- at least one manual control element, located inside the cab, configured to simultaneously open the first and second relays,
- a crash sensor for detecting a crash situation and
- an electronic control unit which is connected between the crash sensor and the second relay, said electronic control unit being configured to open second relay when it receives a signal from the crash sensor corresponding to a crash situation.

By the provision of a truck according to the present invention, the advantage is to offer a safer truck complying with ADR which increases the safety of the driver, surrounding people and emergency services. Additionally, the advantage is to provide an optimized truck comprising a quick and straightforward system able to decrease the risk of fire and/or explosions of dangerous goods.

According to the present invention, the terms "disconnect" and "isolate" mean that the battery or solar panel is electrically isolated from the rest of the electrical network of the vehicle.

According to the present invention, a relay means an electrically operated switch.

According to the present invention, the term "simultaneously" means that the action time is up to few milliseconds.

According to one embodiment, the crash sensor is an accelerometer comprising a moving element, such as a ball, configured to close one electrical terminal of the second relay, so that, in a crash situation, the displacement of moving element opens said electrical terminal of second relay.

According to one embodiment, the crash sensor is located inside the cab.

According to one embodiment, the truck includes another manual control element located on the chassis configured to simultaneously open the first and second relays. In this embodiment, the driver may open the first and the second relays inside the cab or on the exterior surface of the chassis.

According to one embodiment, the truck comprises a converter located between the solar panel and the battery. The voltage converter may transform the voltage generated by the solar panel into a lower voltage power which is used to charge the battery.

According to one embodiment, the solar panel is configured to match the cab deflector. In particular, the shape of the solar panel is adapted to match the shape of the deflector.

Another objective is achieved by the provision of a method for the management of a truck according to any one of the preceding claims, said method comprising the following steps:
A. Detecting a crash situation while the truck is in motion using the crash sensor and sending a signal of the crash situation to the electronic control unit,
B. Disconnecting the solar panel through the second relay using the electronic control unit,
C. Manually disconnecting the battery through the first relay using at least one manual control element.

By the provision of a method for the management of the truck complying with the ADR according to the present invention, the advantage is to provide a quick and straightforward method to increase the safety of the driver, surrounding people and emergency services.

According to one embodiment, step C) is performed before step B).

According to one embodiment, in step C), the manual opening of the first relay leads to the opening of the second relay.

According to one embodiment, in step B), the second relay is opened during a crash situation.

According to one embodiment, in step B), the electronic control unit opens the second relay.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a perspective view of a truck complying with ADR according to one embodiment,
Fig. 2 is a schematic representation of the truck complying with ADR according to one embodiment,
Fig. 3 is a schematic representation of the truck complying with ADR according to one embodiment and
Fig.4 is top view of a truck complying with ADR according to one embodiment.

### DETAILED DESCRIPTION OF EXAMPLE EMBODIMENTS OF THE INVENTION

The present description is given in an X, Y, Z referential where X is defined as the longitudinal direction of the vehicle 1, Y is defined as the transversal direction and Z is defined as the vertical direction of the vehicle 1.

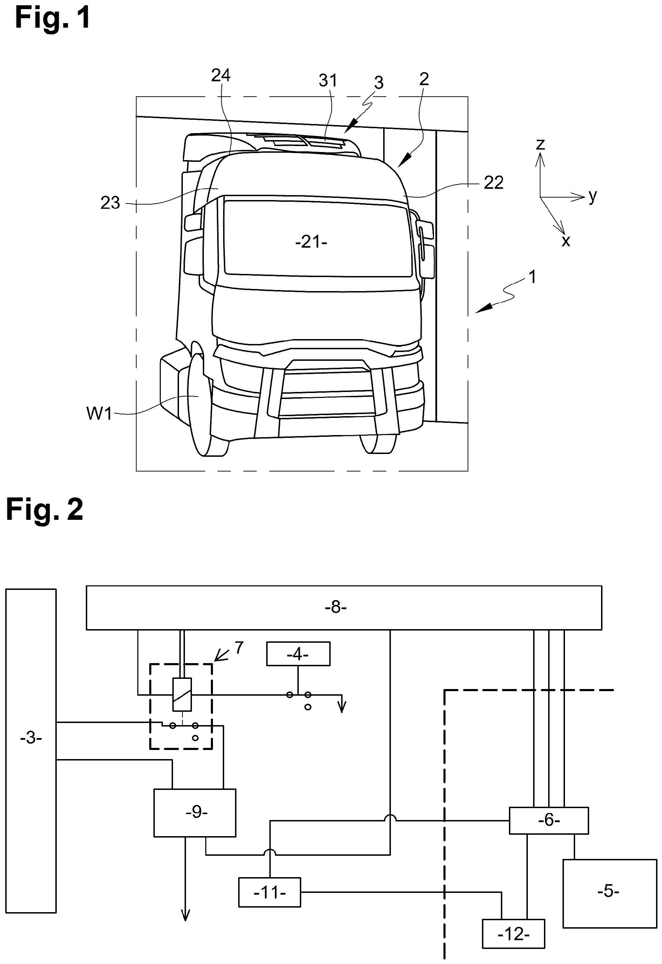

Figure 1 shows a truck 1 complying with ADR, which is preferably a Diesel truck or more generally a truck equipped with an Internal Combustion Engine (ICE). In a variant not shown, the truck can also be an electric (EV) or hybrid truck vehicle (HEV), i.e. a truck using at least partly electric energy as a source of power.

In the example, the truck 1 comprises front wheels W1.

The truck 1 further comprises a cab 2 suitably mounted on a chassis and including an interior space 21 delimited by a right side 22, a left side 23, a floor (not shown) and a roof 24. In this example, the solar panel 3 including solar cells 31 are provided on said roof 24.

As shown in Figures 1 and 2, the truck 1 also includes at least one battery 5 arranged on the chassis. Typically, battery 5 is a 12V or 24V Acid-Lead battery. Advantageously, the solar cells 31 enable to recharge the battery 5 even when the ICE is off, for example when the truck is parked. This allows supplementing the battery especially for the case in which the occupant/driver of the vehicles uses greedy electrical devices at night, such as HVAC, phone/tablet chargers, TV, fridge and so on. In variant, the battery 5 may also be a Lithium-ion battery (for an electric truck).

The truck 1 comprises a crash sensor 4 for detecting a crash situation and sending a signal of a crash situation to the electronic control unit (not shown). The electronic control unit then disconnects the second relay in case of crash situation. The crash sensor 4 may be an accelerometer capable of detecting a steep deceleration characteristic of a crash.

For example, the truck comprises at least two airbags between the occupants and hard surfaces, for example the dashboard and/or the steering wheel, within the vehicle, which diffuse the energy of the crash across a wider area. Another crash sensor may trigger the inflation of the airbag upon rapid deceleration, and within seconds allows the airbag to deflate.

Alternatively, a unique crash sensor is used to detect a crash situation and to automatically disconnect the second relay in case of crash situation and to trigger the inflation of airbags.

A first relay 6, which is better known as "master switch", is provided to disconnect the battery 5, i.e. electrically isolate the battery.

A second relay 7 is provided to disconnect the solar panel 3. The second relay 7 is distinctive from the first relay 6. According to the present invention, the terms "disconnect" and "isolate" refer to the action of isolating the battery 5 or solar panel 3 from the rest of the electrical network, in particular the bus CAN 8, of the vehicle.

For example, first and second relays 6 and 7 are electronically controlled, which means that the two relays 6, 7 are controlled as a function of a control signal, preferably a digital or binary signal, that is sent to the relay.

In this example, the crash sensor 4 comprises a moving element, such as a ball, configured to close one electrical terminal, typically the negative terminal (mass) of the second relay, so that, in a crash situation, the displacement of moving element opens the mass of second relay.

Another manual control element 11 can be provided on vehicle chassis. This manual control element 11 can be operated by the firemen, which induces firstly the disconnection of the battery 5 and secondly, almost simultaneously, the disconnection of the solar panel(s) 3.

A voltage converter 9 may be located between the solar panel 3 and the battery 5. The voltage converter 9 transforms the voltage generated by the solar panel 3, for example about 50V, into a lower voltage power, for example 12V or 24V, which is used to charge the battery 5.

Usually, in case of a vehicle accident, firemen manually disconnect the vehicle battery before starting rescue operations. However, there is no way to disconnect the solar panel(s) since it is rare to install solar panels on trucks. Thus, there is a risk of explosions and fires. The truck adapted to transport Dangerous Goods according to the invention solves this problem by providing a system that automatically disconnects the solar panel when a crash situation is detected.

According to the present invention, when a crash situation is detected by the crash sensor 4. The crash sensor 4 sends a signal of the crash situation to an Electronic Control Unit ECU (not shown). The electronic control unit then opens the second relay 7 by sending the appropriate control signal to relay 7. The second relay 7 is thus open, thereby disconnecting solar panel 3.

Firemen can disconnect the battery 5 by disconnecting the battery terminals. In variant, firemen can disconnect the battery 5 by operating a manual control element 12 (if any) provided on the chassis in close proximity to the battery 5. In this case, the operation of control element 12 leads to the opening of the first relay 6 which in turn, leads to battery disconnection.

In addition, and in order to comply with the regulation in respect of the transport of Dangerous Goods by road, the manual control element 11 provided inside the truck cab 2 allows the driver to disconnect simultaneously the battery 5 and solar panel 3. Thus, said manual control element 11 may be used by the driver when parking inside a risky site, also known as SEVESO site. Cutting off all electric sources of the vehicle enables to make sure that there is no static electricity remaining and accordingly it prevents the apparition of a spark that may lead to an explosion or a fire in case of gas leak coming from outside of the vehicle.

When another manual control element 12 is provided on vehicle chassis, it can be operated by the firemen, which induces firstly the disconnection of the battery 5 and secondly, almost simultaneously, the disconnection of the solar panel(s) 3. Indeed, both relays 6 and 7 are connected with each other through CAN bus 8, which means that, if for any reason, second relay 7 is still closed when firemen arrive on crash location, relay 7 subsequently to the opening of first relay 6. In detail, before starting rescue operations, firemen operate manual control element 12, which triggers the opening of first relay 6. In turn, this information is sent through the CAN bus 8, which involves the opening of second relay 7 (if still closed after crash). Obviously, a reaction time exists, which means that the terms "almost simultaneously" mean that second disconnection occurs a few milliseconds after first disconnection.

This is the advantage of having a manual control element 12 in close proximity to the battery 5. It allows the firemen to manually open both relays 6 and 7 and to ensure that all electrical sources are switched off before starting rescuing operations. However, manual control element 12 remains optional as, normally, second relay 7 is automatically opened after a crash has occurred, which means that firemen normally only need to disconnect the vehicle battery 5 associated to first relay 6.

According to the present invention, a method for the management of the truck 1 comprises a step A) wherein the crash sensor 4 detects a crash situation while the truck is in motion. The crash sensor 4 sends a signal of the crash situation to the electronic control unit.

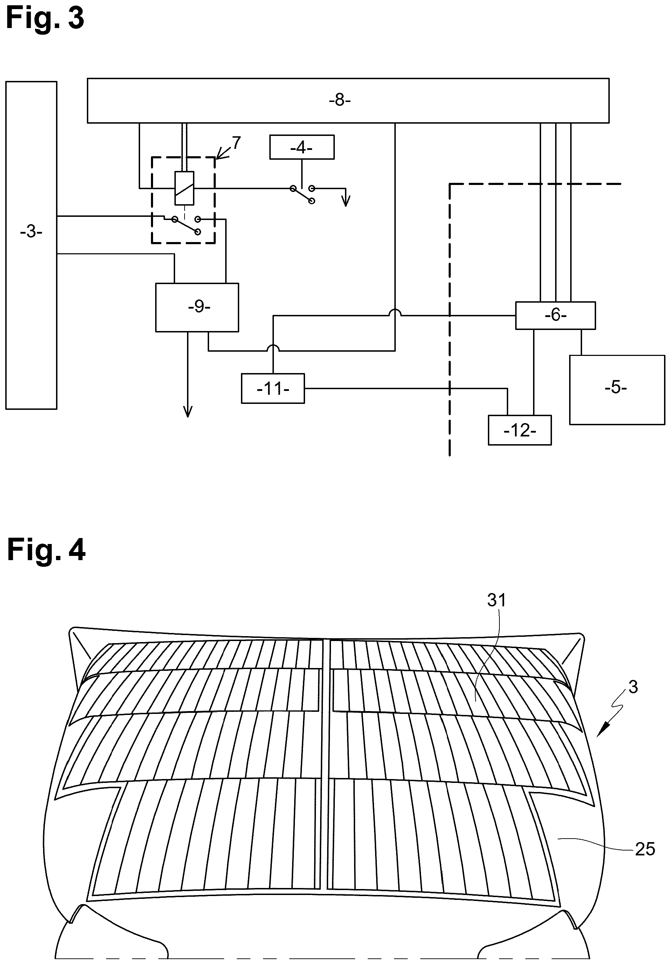

As shown in Figure 3, in case of emergency situation, in a step B), the electronic control unit disconnects the second relay 7. The second relay 7 disconnects the solar panel 3. In step C), the manual control 12 opens the first relay 6 to manually disconnect the battery 5. In one embodiment, step C) is performed before step B). Preferably, in step C), the manual opening of the first relay 6 leads to the opening of the second relay 7.

Alternatively, in step B), the second relay 7 is opened during a crash situation. Preferably, the second relay 7 is opened during a crash situation.

As shown in Figure 4, the solar panel 3 is configured to match the deflector outside surface. In particular, the shape of the solar panel 3 is adapted to match the shape of the deflector 25.

By the provision of the truck and the method for the management of said truck according to the present invention, the advantage is to significantly improve the safety of the driver of the driver, surrounding people and emergency services in case of emergency situation.

It is to be understood that the present invention is not limited to the embodiments described above and illustrated in the drawings; rather, the invention is defined by the scope of the appended claims.

## Claims

1. A truck (1) adapted to transport Dangerous Goods, the truck comprising:
- a chassis on which is arranged a battery (5);
- a cab (2) mounted on the chassis,
- a solar panel (3) for charging the battery (5), said solar panel (3) being arranged on cab roof (24);
- a first relay (6) configured to disconnect the battery (5) and a second relay (7), distinctive from the first relay (6), configured to disconnect the solar panel (3); the truck (1) being **characterized in that** it further comprises:
- at least one manual control element (12), located inside the cab (2), configured to simultaneously open the first (6) and second (7) relays,
- a crash sensor (4) for detecting a crash situation; and
- an electronic control unit which is connected between the crash sensor (4) and the second relay (7), said electronic control unit being configured to open second relay (7) when it receives a signal from the crash sensor (4) corresponding to a crash situation.

2. The truck (1) according to claim 1, wherein the crash sensor (4) is an accelerometer comprising a moving element, such as a ball, configured to close one electrical terminal of the second relay, so that, in a crash situation, the displacement of moving element opens said electrical terminal of second relay.

3. The truck (1) according to claim 1 or 2, wherein the crash sensor (4) is located inside the cab (4).

4. The truck (1) according to any of the preceding claims, **characterized in that** the truck includes another manual control element (11) located on the chassis configured to simultaneously open the first (6) and second (7) relays.

5. The truck (1) according to any of the preceding claims, wherein the truck comprises a converter (9) located between the solar panel (3) and the battery (5).

6. The truck (1) according to any of the preceding claims, wherein the solar panel (3) is configured to match a cab deflector (25).

7. A method for the management of a truck (1) according to any one of the preceding claims, said method comprising the following steps:
A. Detecting a crash situation while the truck (1) is in motion using the crash sensor (4) and sending a signal of the crash situation to the electronic control unit,
B. Disconnecting the solar panel (3) through the second relay (7) using the electronic control unit; the method being **characterized in that** it further comprises the following step:
C. Manually disconnecting the battery (5) through the first relay (6) using at least one manual control element (12).

8. The method for the management of the truck (1) according to claim 7, wherein step C) is performed before step B).

9. The method according for the management of the truck (1) to claim 8, wherein in step C), the manual opening of the first relay (6) leads to the opening of the second relay (7).

10. The method for the management of the truck (1) according to claim 7, wherein in step B), the second relay (7) is opened during a crash situation.

11. The method for the management of the truck (1) according to claim 8, wherein in step B), the electronic control unit opens the second relay (7).

## Patentansprüche

1. Lastwagen (1), der dazu ausgelegt ist, Gefahrgut zu transportieren, wobei der Lastwagen Folgendes umfasst:
- ein Fahrgestell, auf dem eine Batterie (5) angeordnet ist;
- eine Fahrerkabine (2), die auf dem Fahrgestell montiert ist;
- ein Solarmodul (3) zum Aufladen der Batterie (5), wobei das Solarmodul (3) auf dem Fahrerkabinendach (24) angeordnet ist;
- ein erstes Relais (6), das dazu konfiguriert ist, die Batterie (5) zu trennen, und ein zweites Relais (7), das sich vom ersten Relais (6) unterscheidet und dazu konfiguriert ist, das Solarmodul (3) zu trennen; wobei der Lastwagen (1) **dadurch gekennzeichnet ist, dass** er ferner Folgendes umfasst:
- mindestens ein manuelles Steuerelement (12), das sich im Inneren der Fahrerkabine (2) befindet und dazu konfiguriert ist, das erste (6) und das zweite (7) Relais gleichzeitig zu öffnen,
- einen Kollisionssensor (4) zum Detektieren einer Unfallsituation; und
- eine elektronische Steuereinheit, die zwischen den Kollisionssensor (4) und das zweite Relais (7) geschaltet ist, wobei die elektronische Steuereinheit dazu konfiguriert ist, das zweite Relais (7) zu öffnen, wenn sie ein Signal vom Kollisionssensor (4) empfängt, das einer Unfallsituation entspricht.

2. Lastwagen (1) nach Anspruch 1, wobei der Kollisionssensor (4) ein Beschleunigungsmesser ist, der ein sich bewegendes Element, wie etwa eine Kugel, umfasst, das dazu konfiguriert ist, einen elektrischen Anschluss des zweiten Relais zu schließen, so dass die Verschiebung des sich bewegenden Elements in einer Unfallsituation den elektrischen Anschluss des zweiten Relais öffnet.

3. Lastwagen (1) nach Anspruch 1 oder 2, wobei sich der Kollisionssensor (4) im Inneren der Fahrerkabine (4) befindet.

4. Lastwagen (1) nach einem der vorhergehenden Ansprüche, **dadurch gekennzeichnet, dass** der Lastwagen ein weiteres manuelles Steuerelement (11) enthält, das sich am Fahrgestell befindet und dazu konfiguriert ist, das erste (6) und das zweite (7) Relais gleichzeitig zu öffnen.

5. Lastwagen (1) nach einem der vorhergehenden Ansprüche, wobei der Lastwagen einen Wandler (9) umfasst, der sich zwischen dem Solarmodul (3) und der Batterie (5) befindet.

6. Lastwagen (1) nach einem der vorhergehenden Ansprüche, wobei das Solarmodul (3) dazu konfiguriert ist, zu einem Fahrerkabinen-Windabweiser (25) zu passen.

7. Verfahren für das Management eines Lastwagens (1) nach einem der vorhergehenden Ansprüche, wobei das Verfahren die folgenden Schritte umfasst:
A. Detektieren einer Unfallsituation, während der Lastwagen (1) in Bewegung ist, unter Verwendung des Kollisionssensors (4) und Senden eines Signals der Unfallsituation an die elektronische Steuereinheit,
B. Trennen des Solarmoduls (3) durch das zweite Relais (7) unter Verwendung der elektronischen Steuereinheit; wobei das Verfahren **dadurch gekennzeichnet ist, dass** es ferner den folgenden Schritt umfasst:
C. manuelles Trennen der Batterie (5) durch das erste Relais (6) unter Verwendung mindestens eines manuellen Steuerelements (12).

8. Verfahren für das Management des Lastwagens (1) nach Anspruch 7, wobei Schritt C) vor Schritt B) durchgeführt wird.

9. Verfahren nach für das Management des Lastwagens (1) von Anspruch 8, wobei das manuelle Öffnen des ersten Relais (6) in Schritt C) zum Öffnen des zweiten Relais (7) führt.

10. Verfahren für das Management des Lastwagens (1) nach Anspruch 7, wobei das zweite Relais (7) in Schritt B) während einer Unfallsituation geöffnet wird.

11. Verfahren für das Management des Lastwagens (1) nach Anspruch 8, wobei die elektronische Steuereinheit in Schritt B) das zweite Relais (7) öffnet.

## Revendications

1. Camion (1) adapté au transport de marchandises dangereuses, le camion comprenant :
- un châssis sur lequel est agencée une batterie (5) ;
- une cabine (2) montée sur le châssis,
- un panneau solaire (3) pour charger la batterie (5), ledit panneau solaire (3) étant agencé sur le toit de la cabine (24) ;
- un premier relais (6) configuré pour déconnecter la batterie (5) et un second relais (7), distinct du premier relais (6), configuré pour déconnecter le panneau solaire (3) ; le camion (1) est **caractérisé en ce qu'**il comprend en outre :
- au moins un élément de commande manuelle (12), situé à l'intérieur de la cabine (2), configuré pour ouvrir simultanément le premier (6) et le second (7) relais,
- un capteur de collision (4) pour détecter une situation de collision ; et
- une unité de commande électronique qui est connectée entre le capteur de collision (4) et le second relais (7), ladite unité de commande électronique étant configurée pour ouvrir le second relais (7) lorsqu'elle reçoit un signal du capteur de collision (4) correspondant à une situation de collision.

2. Camion (1) selon la revendication 1, dans lequel le capteur de collision (4) est un accéléromètre comprenant un élément mobile, tel qu'une boule, configuré pour fermer une borne électrique du second relais, de sorte que, dans une situation de collision, le déplacement de l'élément mobile ouvre ladite borne électrique du second relais.

3. Camion (1) selon la revendication 1 ou 2, dans lequel le capteur de collision (4) est situé à l'intérieur de la cabine (4).

4. Camion (1) selon l'une quelconque des revendications précédentes, **caractérisé en ce que** le camion comprend un autre élément de commande manuelle, (11) situé sur le châssis, configuré pour ouvrir simultanément le premier (6) et le second (7) relais.

5. Camion (1) selon l'une quelconque des revendications précédentes, dans lequel le camion comprend un convertisseur (9) situé entre le panneau solaire (3) et la batterie (5).

6. Camion (1) selon l'une quelconque des revendications précédentes, dans lequel le panneau solaire (3) est configuré pour correspondre à un déflecteur de cabine (25).

7. Procédé de gestion d'un camion (1) selon l'une quelconque des revendications précédentes, ledit procédé comprenant les étapes suivantes :
A. la détection d'une situation de collision, tandis que le camion (1) est en mouvement, à l'aide du capteur de collision (4), et l'envoi d'un signal de la situation de collision à l'unité de commande électronique,
B. la déconnexion du panneau solaire (3) à travers le second relais (7) à l'aide de l'unité de commande électronique ; le procédé étant **caractérisé en ce qu'**il comprend en outre l'étape suivante :
C. la déconnexion manuelle de la batterie (5) à travers le premier relais (6), à l'aide d'au moins un élément de commande manuelle (12).

8. Procédé de gestion du camion (1) selon la revendication 7, dans lequel l'étape C) est effectuée avant l'étape B).

9. Procédé de gestion du camion (1) selon la revendication 8, dans lequel, à l'étape C), l'ouverture manuelle du premier relais (6) entraîne l'ouverture du second relais (7).

10. Procédé de gestion du camion (1) selon la revendication 7, dans lequel, à l'étape B), le second relais (7) est ouvert lors d'une situation de collision.

11. Procédé de gestion du camion (1) selon la revendication 8, dans lequel, à l'étape B), l'unité de commande électronique ouvre le second relais (7).
